# EUROPÄISCHE PATENTSCHRIFT

(11) **EP 2 602 161 B1**
(45) Veröffentlichungstag und Bekanntmachung des Hinweises auf die Patenterteilung: **09.07.2014**
(21) Anmeldenummer: 12008156.7
(22) Anmeldetag: 06.12.2012
(51) Int. Cl.: B60R 25/10, B60R 25/102

(54) **System und Verfahren zur Detektion und/oder Vorbeugung von Tierverbiss an Fahrzeugen, Computerprogramm und Computerprogrammprodukt**
System and method for detecting and/or preventing of animal bites on vehicles, computer program and computer program product
Système et procédé de détection et/ou prévention des rongements d'animaux sur les véhicules, programme informatique et produit de programme informatique

(30) Priorität: 07.12.2011 DE 102011120380
(43) Veröffentlichungstag der Anmeldung: 12.06.2013
(73) Patentinhaber: Deutsche Telekom AG, 53113 Bonn (DE)
(72) Erfinder: Adam, Rüdiger, 53819 Neunkirchen-Seelscheid (DE)
(74) Vertreter: Schwöbel, Thilo K.

(56) Entgegenhaltungen:
- DE-A1-102006 043 995
- DE-A1-102009 061 017
- US-A- 5 793 706
- US-A1- 2002 163 426
- US-A1- 2005 062 602

## Beschreibung

### Stand der Technik

Die Erfindung betrifft ein System zur Detektion und/oder Vorbeugung von Tierverbiss an Fahrzeugen, wobei das System ein in oder an einem Fahrzeug angebrachtes Detektionsmodul aufweist, wobei dem Detektionsmodul ein Kommunikationsmodul zugeordnet ist und wobei dem System ferner ein programmierbares mobiles Telekommunikationsendgerät zugeordnet ist. Ein solches System ist aus der US 2002/0163426 A gemäß Oberbegriff des Anspruchs 1 bekannt.

Die Erfindung betrifft ferner ein Verfahren zur Detektion und/oder Vorbeugung von Tierverbiss an Fahrzeugen durch Verwendung eines Systems mit einem in oder an einem Fahrzeug angebrachten Detektionsmodul, wobei dem Detektionsmodul ein Kommunikationsmodul zugeordnet ist und wobei dem System ferner ein programmierbares mobiles Telekommunikationsendgerät zugeordnet ist.

Der Schaden der durch den Tierverbiss an Fahrzeugen entsteht, ist erheblich. Allein durch Marder, insbesondere Steinmarder, werden pro Jahr in Deutschland geschätzte Schäden in Höhe von mehreren 10 Millionen Euro verursacht.

Die Tiere dringen hierbei - Marder verstärkt insbesondere bei Revierkämpfen und in der Paarungszeit, etwa im Frühjahr- beispielsweise in den Motorraum von Automobilen ein und zerstören wichtige Fahrzeugeinrichtungen, wie beispielsweise elektrische Kabel, Schläuche für Flüssigkeiten oder Gase oder andere Einrichtungen, wie zum Beispiel elastische Aufhängungseinrichtungen, insbesondere aus Gummi oder einem Gummimaterial, beispielsweise am Motor, oder dergleichen.

Beispiele für insbesondere von Mardern verbissenen Bauteilen sind:
-- Zündkabel,
-- Kühlwasserschläuche,
-- Kunststoffschläuche,
-- Faltenbälge an Antriebswellen und an der Lenkung,
-- Niederspannungskabel bzw. deren Isolierung,
-- Isoliermatten für die Geräusch- und Wärmedämmung

Die sich hieraus ergebenden Schäden sind teilweise erheblich und können insbesondere derart sein, dass die Fahrzeugsicherheit, die Insassensicherheit und die Sicherheit von anderen Verkehrsteilnehmern maßgeblich beeinträchtigt ist.

Zur Vermeidung von Tierverbiss an Fahrzeugen sind bisher beispielsweise die Verwendung von stromführenden Metallplatten oder Metallgitter bekannt, die unterhalb des Fahrzeugs angebracht werden. Hierbei werden die Tiere bei Kontakt mit Stromschlägen beaufschlagt, so dass das entsprechende Gebiet, d.h. das solchermaßen geschützte Fahrzeug, gemieden wird. Hierbei ist es jedoch wegen der geringen Größe der Tiere entweder notwendig, sämtliche Zugänge - bis hin zu Öffnungen, die lediglich einige Zentimeter Durchmesser aufweisen - in zu schützende Bereiche des Fahrzeugs, insbesondere der Motorraum, mit einer solchen Vorrichtung bzw. mit mehreren Vorrichtungen auszurüsten, oder der Schutz bleibt unvollkommen.

Zudem weisen statische Einrichtungen bzw. solche Einrichtungen, die stets in gleicher Weise eine den Tierverbiss abwehrende Komponente aufweisen, den Nachteil auf, dass bei den Tieren ein Gewöhnungseffekt eintritt bzw. gezielt lediglich die geschützten Zugänge zum Fahrzeug gemieden werden, andere Zugänge jedoch nicht

### Offenbarung der Erfindung

Der Erfindung liegt die Aufgabe zugrunde, ein System und ein Verfahren zur Detektion und/oder Vorbeugung von Tierverbiss an Fahrzeugen anzugeben, das eine möglichst flexible, einfache und benutzerdefinierbare Reaktion auf Tierverbissvorgänge bzw. Tierverbissversuche an Fahrzeugen ermöglicht, wobei sowohl ein größtmögliches Maß an Einwirkungsmöglichkeiten seitens des Benutzers und ein möglichst geringer Aufwand seitens des Benutzers miteinander kombiniert werden.

Diese Aufgabe wird erfindungsgemäß gelöst durch ein System zur Detektion und/oder Vorbeugung von Tierverbiss an Fahrzeugen, wobei das System ein in oder an einem Fahrzeug angebrachtes Detektionsmodul aufweist, wobei dem Detektionsmodul ein Kommunikationsmodul zugeordnet ist, wobei dem System ferner ein programmierbares mobiles Telekommunikationsendgerät zugeordnet ist, wobei das Detektionsmodul wenigstens einen Sensor aufweist, wobei der Sensor konfiguriert ist, die Anwesenheit eines Eindringlings in einen bei abgeschlossenem Fahrzeug von außerhalb des Fahrzeugs zugänglichen Überwachungsbereich des Fahrzeugs zu detektieren, wobei das Detektionsmodul und das Kommunikationsmodul vorgesehen sind, ein Signal wenigstens vom Detektionsmodul zum Kommunikationsmodul zu übertragen, wobei das Kommunikationsmodul eine Mobilfunkschnittstelle zur Nutzung eines mobilen Telekommunikationsnetzes aufweist, wobei das Kommunikationsmodul und das mobile Telekommunikationsendgerät vorgesehen sind, in Abhängigkeit des Signals eine Benachrichtigungsinformation vom Kommunikationsmodul zum mobilen Telekommunikationsendgerät über die Mobilfunkschnittstelle wenigstens indirekt zu übertragen, wobei das System derart vorgesehen ist, das im Fall einer Detektion der Anwesenheit eines Eindringlings in dem Überwachungsbereich des Fahrzeugs wenigstens die Benachrichtigungsinformation vom Kommunikationsmodul zum Telekommunikationsnetz übertragen wird, wobei das System entweder derart konfiguriert ist, dass die Benachrichtigungsinformation zum Telekommunikationsendgerät übertragen wird, oder wobei dem System eine dem mobilen Telekommunikationsnetz zugeordnete Speicher-/Prozesseinheit zugeordnet ist und in Abhängigkeit einer in der Speicher-/Prozesseinheit gespeicherten Weiterleitungsinformation die Benachrichtigungsinformation zum Telekommunikationsendgerät übertragen wird oder lediglich in der Speicher-/Prozesseinheit gespeichert wird.

Es ist dadurch gemäß der vorliegenden Erfindung in vorteilhafter Weise möglich, dass ein Benutzer in einstellbarer Weise über ein Tierverbissereignis oder auch lediglich ein potentielles Tierverbissereignis informiert wird oder zumindest informiert werden kann. Hierdurch ist es dem Benutzer möglich, in flexibler Weise auf das Ereignis zu reagieren, etwa dadurch, dass der Benutzer selbst nachschaut (insbesondere sofern eine räumliche Nähe vorliegt) oder aber eine andere Person beauftragt, nachzusehen. Erfindungsgemäß ist es für einen Benutzer insbesondere auch einstellbar, dass keine dezidierte Information bis zum Benutzer vordringt, sondern dass eine vorher definierte Reaktion, entweder einer Benachrichtigung einer anderen Person eingeleitet wird oder aber eine Gegenmaßnahme getroffen wird.

Die Detektion eines zumindest versuchten Eindringens in den Überwachungsbereich erfolgt beispielsweise mittels eines Sensors oder mittels einer Mehrzahl von Sensoren, die in oder an dem zu überwachenden Bereich angebracht sind. Dieser Sensor oder diese Sensoren sind im Detektionsmodul zusammengefasst, d.h. das Detektionsmodul weist den Sensor bzw. die Mehrzahl von Sensoren auf. Es kann erfindungsgemäß auch vorgesehen sein, dass das Detektionsmodul aus mehreren Einzelmodulen aufgebaut ist, die jeweils einen oder mehrere Sensor umfassen. Mittels des Detektionsmoduls ist es erfindungsgemäß möglich, die Anwesenheit eines Eindringlings, insbesondere ein Tier wie beispielsweise ein Marder, in den bei abgeschlossenem Fahrzeug von außerhalb des Fahrzeugs zugänglichen Überwachungsbereich des Fahrzeugs (d.h. in der Regel der Motorraum, jedenfalls aber nicht der bei abgeschlossenem Fahrzeug in der Regel nicht zugängliche Innenraum des Fahrzeugs) zu detektieren.

Erfindungsgemäß ist es bevorzugt vorgesehen, dass das System ein Aktuatormodul aufweist, wobei das Aktuatormodul derart konfiguriert ist, dass durch Aktivierung des Aktuatormoduls ein Eindringling aus dem Überwachungsbereich vertreibbar ist.

Hierdurch ist es erfindungsgemäß vorteilhaft möglich, dass nicht nur passiv ein Eindringen eines Eindringlings in den Überwachungsbereich detektiert werden kann, sondern auch eine aktive Reaktion mit Blick auf eine Vertreibung des Eindringlings aus dem Überwachungsbereich erfolgen kann.

Besonders bevorzugt ist es gemäß der vorliegenden Erfindung ferner, dass eine selbsttätige Aktivierung des Aktuatormoduls im Fall einer Detektion der Anwesenheit eines Eindringlings im Überwachungsbereich des Fahrzeugs vorgesehen ist.

Eine solche Ausführungsform der vorliegenden Erfindung hat den Vorteil, dass keine Benutzerinteraktion zur Aktivierung des Aktuatormoduls und damit zur Vertreibung des Eindringlings aus dem Überwachugsbereich erforderlich ist, sondern dass eine automatische Aktivierung - auch beispielsweise in der Nacht oder aber bei einem längeren Abstellen des Fahrzeugs, etwa in einem Parkhaus, beispielsweie während einer Dienstreise, während eines Urlaubs oder dergleichen - erfolgen kann. Ferner hat eine solche Ausführungsform den Vorteil, dass sie mit relativ einfachen Mitteln realisierbar ist, weil das Aktuatormodul nicht zwingend mit dem Kommunikationsmodul verbunden sein muss bzw. nicht zwingend eine Verbindung bzw. eine Informations- oder Datenübermittlung zwischen dem Aktuatormodul und dem Kommunikationsmodul realisiert werden muss.

Die Auswahl, welche Betriebsweise (d.h. ob eine selbsttätige Aktivierung des Aktuatormoduls im Fall einer Detektion der Anwesenheit eines Eindringlings im Überwachungsbereich des Fahrzeugs vorgesehen ist oder ob ausschließlich eine benutzerinduzierte Aktivierung des Aktuatormoduls (d.h. über eine Bedienereingabe am Telekommunikationsendgerät)) vorgesehen ist, ist erfindungsgemäß insbesondere durch eine Benutzervorgabe bzw. Benutzereinstellung vorgesehen.

Es ist erfindungsgemäß ferner bevorzugt vorgesehen, dass das Kommunikationsmodul dem Aktuatormodul zugeordnet ist, wobei das Kommunikationsmodul vorgesehen ist, über das mobile Telekommunikationsnetz wenigstens eine Aktivierungsinformation zu empfangen, wobei das Aktuatormodul und das Kommunikationsmodul vorgesehen sind, in Abhängigkeit der Aktivierungsinformation ein weiteres Signal vom Kommunikationsmodul zum Aktuatormodul zu übertragen, wobei eine Aktivierung des Aktuatormoduls im Falle des Empfangs des weiteren Signals vorgesehen ist.

Bei einer solchen Ausführungsform ist es erfindungsgemäß vorteilhaft möglich, dass die Aktivierung des Aktuatormoduls von außerhalb des Überwachungsbereichs und insbesondere auch außerhalb des Fahrzeugs möglich ist. Hierdurch ist es erfindungsgemäß zum einen möglich, dass der Benutzer selbst eine solche Aktivierung des Aktuatormoduls vornimmt und dadurch eine gezielte Einwirkungsmöglichkeit auf das Verhalten des Systems gewinnt. Weiterhin ist es erfindungsgemäß bei dieser Ausführungsform weiterhin auch möglich, dass ein Benutzer mittels einer Konfiguration des Systems Einfluss auf dessen Verhalten nimmt.

Insbesondere ist es erfindungsgemäß bevorzugt vorgesehen, dass das System derart konfiguriert ist, dass die Aktivierungsinformation vom Telekommunikationsendgerät zum Kommunikationsmodul übertragen wird.

Hierbei kann beispielsweise die Aktivierungsinformation vom Telekommunikationsendgerät selbsttätig generiert und zum Kommunikationsmodul übertragen werden oder aber die Aktivierungsinformation wird aufgrund einer Benutzerinteraktion generiert und anschließend zum Kommunikationsmodul übertragen. In diesen beiden Fällen wird jedenfalls die Aktivierungsinformation vom Telekommunikationsendgerät aus zum Kommunikationsmodul übertragen.

Alternativ hierzu ist es gemäß weiterer bevorzugter Ausführungsbeispiele der vorliegenden Erfindung auch vorgesehen, dass das System derart konfiguriert ist, dass in Abhängigkeit einer in der Speicher-/Prozesseinheit gespeicherten Reaktionsinformation die Aktivierungsinformation selbsttätig bei Empfang der Benachrichtigungsinformation zum Kommunikationsmodul übertragen wird. Erfindungsgemäß ist es bevorzugt vorgesehen, dass die Speicher-/Prozesseinheit die Nutzdaten bzw. einen Teil der Nutzdaten z.B. als Mehrwertdienste an Drittanbieter, wie Versicherer, zu Forschungszwecken (beispielsweise an Biologen) sendet. Voraussetzung hierfür wäre die Einwilligung des Benutzers des erfindungsgemäßen Systems bzw. dessen Eigentümers oder Besitzers. Erfindungsgemäß kann die Speicher-/Prozesseinheit entweder als reine Speichereinheit vorgesehen sein oder aber Prozessormitteln zugeordnet sein bzw. solche Prozessormittel umfassen. Im Rahmen der vorliegenden Erfindung wird jedoch für beide Ausführungsvarianten durchweg von Speicher-/Prozesseinheit gesprochen.

Hierbei wird die Konfiguration der Reaktion des Systems auf die Detektion eines Eindringlings in den Überwachungsbereich nicht im Telekommunikationsendgerät vorgenommen, sondern in der Speicher-/Prozesseinheit. Eine solche Vorgehensweise hat den Vorteil, dass die zum Telekommunikationsendgerät bzw. vom Telekommunikationsendgerät zu übertragende Datenmenge reduziert werden kann.

Weiterhin ist es erfindungsgemäß bevorzugt vorgesehen, dass der wenigstens eine Sensor des Detektionsmoduls ein Ultraschallsensor und/oder ein Infrarot-Sensor und/oder eine Kamera für Bewegtbilder bzw. für Standbilder ist. Erfindungsgemäß ist es auch möglich und bevorzugt, dass eine Mehrzahl von Sensoren des Detektionsmoduls vorgesehen sind. Hierbei können einen Mehrzahl von gleichartigen Sensoren (d.h. beispielsweise eine Mehrzahl von Ultraschallsensoren bzw. eine Mehrzahl von Infrarot-Sensoren bzw. eine Mehrzahl von Kameras für Bewegtbilder bzw. für Standbilder) vorgesehen sein, oder aber es kann eine Mehrzahl von unterschiedlichen Sensoren, d.h. beispielsweise ein Ultraschallsensor kombiniert mit einem Infrarot-Sensor bzw. ein Infrarot-Sensor kombiniert mit einer Kamera für Bewegtbilder bzw. für Standbilder, vorgesehen sein. Hierdurch ist es erfindungsgemäß vorteilhaft möglich, dass eine größere Abdeckung bzw. eine möglichst vollständige Abdeckung des Überwachungsbereichs möglich ist bzw. dass der Überwachungsbereich möglichst lückenlos überwacht werden kann und insbesondere auch Ecken, Winkel und Zugänge zum Überwachungsbereich überwacht werden können.

Hierdurch kann mit vergleichsweise geringem Aufwand eine effektive Überwachung des Überwachungsbereichs realisiert werden.

Erfindungsgemäß ist es weiterhin bevorzugt vorgesehen, dass die Aktivierung des erfindungsgemäßen Systems zur Detektion und/oder zur Vorbeugung von Tierverbiss an Fahrzeugen entweder nicht erfolgt oder aber zurückgenommen wird, sofern die Motorhaube des Fahrzeugs geöffnet ist oder geöffnet wird. Dies ist insbesondere mit Blick auf eine Aktivierung des Aktuatormoduls vorteilhaft und maßgeglich aus Sicherheitsgründen.

Ferner ist es erfindungsgemäß bevorzugt vorgesehen, dass die Aktivierung des erfindungsgemäßen Systems zur Detektion und/oder zur Vorbeugung von Tierverbiss an Fahrzeugen durch eine Benutzerinteraktion am Telekommunikationsendgerät bewerkstelligt wird und auch durch eine Benutzerinteraktion zurücknehmbar ist (bzw. deaktivierbar ist).

Weiterhin findet in bevorzugter Weise erfindungsgemäß eine Notabschaltung des erfindungsgemäßen Systems zur Detektion und/oder zur Vorbeugung von Tierverbiss an Fahrzeugen dann statt, wenn von einem in oder an dem Fahrzeug angebrachten Unfallsensor (insbesondere ein Inertialsensor) eine Unfallsituation erkannt wird. Weiterhin ist es erfindungsgemäß auch bevorzugt vorgesehen, dass bereits zeitlich vor einem Unfallereignis (das beispielsweise mittels Ultraschallsensoren und/oder Radarsensoren und/oder Videosensoren antizipiert wird) eine Notabschaltung des erfindungsgemäßen Systems zur Detektion und/oder zur Vorbeugung von Tierverbiss an Fahrzeugen erfolgt.

Erfindungsgemäß kann eine feste Zuordnung zwischen einem bestimmten Telekommunikationsendgerät einerseits und einem bestimmten Fahrzeug andererseits (oder einer Mehrzahl bestimmter Fahrzeuge) (oder aber zwischen einer Mehrzahl von bestimmten Telekommunikationsendgeräten einerseits und einem bestimmten Fahrzeug andererseits (oder einer Mehrzahl bestimmter Fahrzeuge)) vorgesehen sein, wobei die Zuordnung bzw. die Authorisierung eines Telekommunikationsendgeräts zur Vornahme von Einstellungsänderungen oder zur Vornahme von Betätigungen beschränkt ist und lediglilch ein zugeordnetes bzw. authorisiertes Telekommunikationsendgerät benutzbar ist. Hierbei kann beispielsweise ein Passwort auf einem Speichermedium, entweder im Telekommunikationsendgerät oder aber in der dem mobilen Telekommunikationsnetz zugeordneten Speicher-/Prozesseinheit gespeichert werden. Die Abspeicherung eines solchen Passworts auf dem Speichermedium kann hierbei insbesondere verschlüsselt erfolgen, insbesondere unter Verwendung eines symmetrischen oder auch asymmetrischen Verschlüsselungsverfahrens, beispielsweise des RSA-Verfahrens.

Ein weiterer Gegenstand der vorliegenden Erfindung ist ein Verfahren zur Detektion und/oder Vorbeugung von Tierverbiss an Fahrzeugen durch Verwendung eines Systems mit einem in oder an einem Fahrzeug angebrachten Detektionsmodul, wobei dem Detektionsmodul ein Kommunikationsmodul zugeordnet ist, wobei dem System ferner ein programmierbares mobiles Telekommunikationsendgerät zugeordnet ist, wobei das Detektionsmodul wenigstens einen Sensor aufweist, wobei der Sensor die Anwesenheit eines Eindringlings in einen bei abgeschlossenem Fahrzeug von außerhalb des Fahrzeugs zugänglichen Überwachungsbereich des Fahrzeugs detektiert, wobei das Kommunikationsmodul eine Mobilfunkschnittstelle zur Nutzung eines mobilen Telekommunikationsnetzes aufweist, wobei das Verfahren die folgenden Verfahrensschritte aufweist:
-- im Fall einer Detektion der Anwesenheit eines Eindringlings in dem Überwachungsbereich des Fahrzeugs wird ein Signal vom Detektionsmodul an das Kommunikationsmodul übertragen,
-- in Abhängigkeit des Signals wird eine Benachrichtigungsinformation vom Kommunikationsmodul über die Mobilfunkschnittstelle zum mobilen Telekommunikationsnetz übertragen, wobei entweder die Benachrichtigungsinformation zum Telekommunikationsendgerät wenigstens indirekt übertragen wird, oder wobei dem System eine dem mobilen Telekommunikationsnetz zugeordnete Speicher-/Prozesseinheit zugeordnet ist und in Abhängigkeit einer in der Speicher-/Prozesseinheit gespeicherten Weiterleitungsinformation die Benachrichtigungsinformation zum Telekommunikationsendgerät übertragen wird oder lediglich in der Speicher-/Prozesseinheit gespeichert wird.

Es ist hierdurch erfindungsgemäß vorteilhaft möglich, dass ein Benutzer in einfacher Weise über die Detektion eines Eindringlings in den Überwachungsbereich informierbar ist und in konfigurierbarer Weise eine Reaktion darauf bereitstellbar ist.

Bevorzugt ist es erfindungsgemäß vorgesehen, dass das System ein Aktuatormodul aufweist, wobei durch Aktivierung des Aktuatormoduls ein Eindringling aus dem Überwachungsbereich vertreibbar ist, wobei im Fall einer Detektion der Anwesenheit eines Eindringlings im Überwachungsbereich des Fahrzeugs eine selbsttätige Aktivierung des Aktuatormoduls erfolgt.

Weiterhin ist es erfindungsgemäß bevorzugt vorgesehen, dass das System ein Aktuatormodul aufweist, wobei durch Aktivierung des Aktuatormoduls ein Eindringling aus dem Überwachungsbereich vertreibbar ist, wobei das Kommunikationsmodul dem Aktuatormodul zugeordnet ist, wobei das Kommunikationsmodul über das mobile Telekommunikationsnetz wenigstens eine Aktivierungsinformation erhält, wobei in Abhängigkeit der Aktivierungsinformation das Kommunikationsmodul ein weiteres Signal zum Aktuatormodul überträgt, wobei das Aktuatormodul beim Empfang des weiteren Signals aktiviert wird.

Ferner ist es auch bevorzugt vorgesehen, dass die Aktivierungsinformation vom Telekommunikationsendgerät selbsttätig generiert und zum Kommunikationsmodul übertragen wird oder dass die Aktivierungsinformation aufgrund einer Benutzerinteraktion generiert und zum Kommunikationsmodul übertragen wird.

Weiterhin ist es erfindungsgemäß bevorzugt vorgesehen, dass in Abhängigkeit einer in der Speicher-/Prozesseinheit gespeicherten Reaktionsinformation die Aktivierungsinformation selbsttätig bei Empfang der Benachrichtigungsinformation zum Kommunikationsmodul übertragen wird.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einem elektrischen Gerät ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einem elektrischen Gerät ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines erfindungsgemäßen Systems mit einem Überwachungsbereich, einem Detektionsmodul, einem Kommunikationsmodul und einem Telekommunikationsendgerät.
- **Figur 2**: zeigt schematisch ein Ablaufdiagramm zur Realisierung des erfindungsgemäßen Verfahrens.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

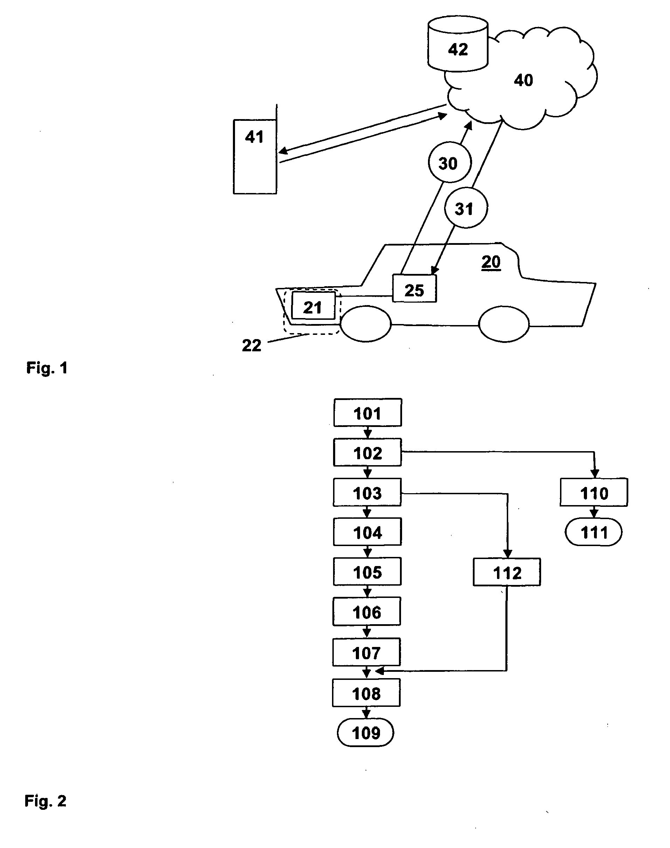

In Figur 1 ist schematisch eine Ansicht eines erfindungsgemäßen Systems 10 mit einem Fahrzeug 20, einem Detektionsmodul 21, einem Überwachungsbereich 22, einem Kommunikationsmodul 25, einem mobilen Telekommunikationsnetz 40 und einem Telekommunikationsendgerät 41 dargestellt.

Der Überwachungsbereich 22 stellt dabei insbesondere einen Bereich des Fahrzeugs 20 dar, der von außen prinzipiell zugänglich ist (d.h. der nicht beispielsweise Teil des Innenraums des Fahrzeugs 20 ist), der jedoch nicht in einer Art und Weise gekapsel bzw. abgeschlossen vorgesehen ist wie dies typischerweise beim Innenraum der Fall ist. Besonders bevorzugt entspricht der Überwachungsbereich 22 im Wesentlichen dem Motorraum des Fahrzeugs 20.

Das Detektionsmodul 21 ist derart vorgesehen, dass das Eindringen eines Eindringlings in den Überwachungsbereich 22 erkannt wird. Dies wird erfindungsgemäß beispielsweise dadurch realisiert, dass das Detektionsmodul 21 einen Sensor in Form eines Ultraschallsensors und/oder in Form eines Infrarot-Sensors aufweist. Mittels solcher Sensoren ist es möglich, die Anwesenheit bzw. das Eindringen eines Eindringlings in den Überwachungsbereich 22 zu detektieren. Alternativ zur Verwendung eines Ultraschallsensors und/oder eines Infrarot-Sensors ist es erfindungsgemäß auch möglich, dass Sensoren anderer Art verwendet werden, beispielsweise ein mechanischer Sensor oder eine Mehrzahl von mechanischen Sensoren, die beispielsweise eine Berührung detektieren, oder auch ein akustischer Sensor oder eine Mehrzahl von akustischen Sensoren, die beispielsweise Erschütterungen detektieren oder auch spezifische Geräusche erkennen.

Erfindungsgemäß ist dem Detektionsmodul 21 das Kommunikationsmodul 25 zugeordnet. Dies bedeutet im Kontext der vorliegenden Erfindung, dass das Kommunikationsmodul 25 entweder mit dem Detektionsmodul 21 integriert vorgesehen sein kann. Alternativ dazu ist es erfindungsgemäß jedoch auch möglich, dass das Detektionsmodul 21 getrennt vom Kommunikationsmodul 25 vorgesehen ist. In dieser zuletzt genannten Ausführungsform ist es erfindungsgemäß möglich, dass das Detektionsmodul 21 mit einem in dem Fahrzeug 20 bereits vorhandenen Kommunikationsmodul 25 verbunden ist.

Erfindungsgemäß weist das Kommunikationsmodul 25 nach außen eine Schnittstelle zu einem mobilen Telekommunikationsnetz (d.h. beispielsweise ein öffentliches Mobilfunknetz), d.h. eine Mobilfunkschnittstelle, auf. Innerhalb des Fahrzeugs 20 ist das Kommunikationsmodul 25 mit dem Detektionsmodul 21, insbesondere über eine drahtgebundene Verbindung, verbunden, so dass vom Detektionsmodul bei Anwesenheit bzw. bei der Detektion der Anwesenheit, eines Eindringlings im Überwachungsbereich 22 ein Signal generiert wird und zum Kommunikationsmodul 25 übertragen wird. In Abhängigkeit des Signals wird durch das Kommunikationsmodul 25 eine Benachrichtigungsinformation 30 generiert und über die Mobilfunkschnittstelle des mobilen Telekommunikationsnetzes 40 zum mobilen Telekommunikationsendgerät 41 übertragen. Es kann hierbei beispielsweise vorgesehen sein, dass die Benachrichtigungsinformation 30 zunächst in einer dem mobilen Telekommunikationsnetz zugeordneten Speicher-/Prozesseinheit 42 gespeichert wird und in Abhängigkeit einer in der Speicher-/Prozesseinheit 42 gespeicherten Weiterleitungsinformation die Benachrichtigungsinformation 30 zum Telekommunikationsendgerät 41 übertragen wird. Alternativ oder auch kumulativ hierzu ist es erfindungsgemäß auch vorgesehen, dass die Benachrichtigungsinformation 30 direkt zum Telekommunikationsendgerät übertragen wird.

Erfindungsgemäß ist es ferner gemäß einer bevorzugten Ausführungsform vorgesehen, dass das System 10 ein Aktuatormodul aufweist, wobei das Aktuatormodul derart konfiguriert ist, dass durch Aktivierung des Aktuatormoduls ein Eindringling aus dem Überwachungsbereich 22 vertreibbar ist.

Ein solches Aktuatormodul kann beispielsweise als ein Kohlendioxid enthaltendes Aktuatormodul vorgesehen sein, so dass bei Aktivierung des Aktuierungsmoduls der Überwachungsbereich 22 mit Kohlendioxid beaufschlagt wird. Alternativ kann ein solches Aktuatormodul auch als ein Ultraschallaktuator vorgesehen sein, so dass bei Aktivierung des Aktuierungsmoduls eine oder mehrere für Menschen unhörbare Ultraschallfrequenz abgestrahlt und der Eindringling in den Überwachungsbereich 22 vertrieben wird. Hierbei ist es erfindungsgemäß insbesondere vorgeshen, dass ein Fehlerzustand erkannt wird, wenn innerhalb einer vorgegebenen Zeitspanne eine maximale Anzahl von Wiederholungen der Aktivierung des Aktuatormoduls erkannt wird. Beispielsweise ist dann vorgesehen, dass keine weitere Aktivierung des Aktuierungsmoduls vor Ablauf einer weiteren vorgegebenen Zeitspanne erfolgt und/oder es wird ein diesen Fehlerzustand bezeichnendes Signal bzw. eine entsprechende Information generiert um eine Alarmierung, beispielsweise des Benutzers, zu bewirken.

Gemäß einer alternativen Ausführungsform der Erfindung kann das Aktuatormodul derart vorgesehen sein, dass eine selbsttätige Aktivierung des Aktuatormoduls im Fall einer Detektion der Anwesenheit eines Eindringlings im Überwachungsbereich 22 des Fahrzeugs 20 vorgesehen ist. Gemäß einer anderen Ausführungsform der Erfindung ist es jedoch zur Aktivierung des Aktuatormoduls vorgesehen, dass das Kommunikationsmodul 25 über das mobile Telekommunikationsnetz 40 wenigstens eine Aktivierungsinformation 31 empfängt, wobei das Aktuatormodul und das Kommunikationsmodul 25 vorgesehen sind, in Abhängigkeit der Aktivierungsinformation 31 ein weiteres Signal vom Kommunikationsmodul 25 zum Aktuatormodul zu übertragen, wobei eine Aktivierung des Aktuatormoduls im Falle des Empfangs des weiteren Signals vorgesehen ist.

In Figur 2 ist schematisch ein Ablaufdiagramm zur Realisierung des erfindungsgemäßen Verfahrens dargestellt.

In einem ersten Verfahrensschritt 101 löst der Sensor (bzw. einer der Mehrzahl von Sensoren) des Detektionsmoduls 21 aus. Optional kann es vorgesehen sein, dass eine Prüfung des Systemzustands vorgenommen wird.

In einem zweiten Verfahrensschritt 102 wird geprüft, ob das Fahrzeug 20 abgestellt ist oder in Betrieb ist. Im ersten Fall wird zu einem dritten Verfahrensschritt 103 verzweigt; im zweiten Fall wird zu einem zehnten Verfahrensschritt 110 verzweigt. Im zehnten Verfahrensschritt 110 wird die Detektion des Eindringlings in den Überwachungsbereich 22 als Fehlalarm interpretiert und die weitere Verarbeitung dieses Alarmereignisses wird in einem elften Verfahrensschritt 111 beendet.

Im dritten Verfahrensschritt 103 wird der durch die Detektion des Detektionsmoduls 21 hervorgerufene Alarm ausgewertet. Insbesondere kann es erfindungsgemäß geprüft werden, ob der Eindringling in den Überwachungsbereich 22 eindringt oder umgekehrt den Überwachungsbereich 22 verlässt. Falls erkannt wird, dass der Eindringling den Überwachungsbereich 22 verlässt, wird zu einem zwölften Verfahrensschritt 112 verzweigt, ansonsten zu einem vierten Verfahrensschritt 104 verzweigt. Im zwölften Verfahrensschritt 112 wird der Alarmierungszustand zurückgenommen und zu einem achten Verfahrensschritt 108 verzweigt.

Im vierten Verfahrensschritt 104 wird innerhalb des Fahrzeugs 20 vom Detektionsmodul 21 das Signal an das Kommunikationsmodul 25 übertragen und vom Kommunikationsmodul 25 die Benachrichtigungsinformation 30 über die Mobilfunkschnittstelle zum mobilen Telekommunikationsnetz 40 übertragen. Hierbei kann vorgesehen sein, dass die Benachrichtigungsinformation 30 auch direkt zum Telekommunikationsendgerät 41 übertragen wird. Alternativ kann ebenfalls vorgesehen sein, dass die Benachrichtigungsinformation 30 zu der Speicher-/Prozesseinheit 42 übertragen wird und in Abhängigkeit einer dort gespeicherten Weiterleitungsinformation zum Telekommunikationsendgerät 41 übertragen wird.

In einem optionalen fünften Verfahrensschritt 105 wird die Benachrichtigungsinformation 30 dem Benutzer des Systems 10, d.h. dem Benutzer des Telekommunikationsendgeräts 41, übermittelt, beispielsweise mittels eines Anrufs und/oder mittels einer Nachricht, beispielsweise einer SMS (Short Message Service) bzw. als GPRS Data Set, oder als Abfolge: zunächst ein Anrufversuch, anschließend (falls der Anruf erfolglos ist) die Übermittlung einer Nachricht, insbesondere als SMS-Nachricht.

In einem weiteren optionalen sechsten Verfahrensschritt 106 werden dem Benutzer Alarminformationen übermittelt und ggf. auf dem programmierbaren mobilen Telekommunikationsendgerät 41 angezeigt. Im sechsten Verfahrensschritt 106 ist es optional weiterhin vorgesehen, dass eine Lokalisierung des Fahrzeugs 20 vorgenommen wird. Hierzu weist das Kommunikationsmodul 25 des Systems 10 ein Ortungsmodul auf, insbesondere basierend auf einem satellitengestützten Ortungssystem, wie beispielsweise dem GPS-System (Global Positioning System) oder dem Galileo-System oder einer GSM basierten Ortung (Zell ID, Location Based Services = LBS).

In einem siebten optionalen Verfahrensschritt 107 werden dem Benutzer verschiedene Reaktionsalternativen zur Reaktion auf die Detektion des Eindringlings im Überwachungsbereich 22 zur Verfügung gestellt. Eine Reaktionsalternative kann darin bestehen, nicht zu reagieren, beispielsweise dann, wenn eine räumliche Nähe zum Fahrzeug vorliegt und nachgesehen werden kann. Eine alternative Reaktionsmöglichkeit kann darin bestehen, dass die Benachrichtigungsinformation 30 an einen weiteren Kommunikationspartner weitergeleitet wird. Eine weitere alternative Reaktionsmöglichkeit kann darin bestehen, mittels einer Aktivierungsinformation 31 an das Kommunikationsmodul 25 im Fahrzeug 20 eine Aktivierung des Aktuatormoduls zu bewirken.

Im achten optionalen Verfahrensschritt 108 wird beim Benutzer angefragt, ob ein Datentransfer zu statistischen Erhebungszwecken über die Detektion des Eindringlings vorgenommen werden soll und falls ja ein solcher Datentransfer durchgeführt.

In einem neunten Verfahrensschritt 109 wird die weitere Verarbeitung des Alarmereignisses beendet.

## Patentansprüche

1. System (10) zur Detektion und/oder Vorbeugung von Tierverbiss an Fahrzeugen,
wobei das System (10) ein in oder an einem Fahrzeug (20) angebrachtes Detektionsmodul (21) aufweist,
wobei dem Detektionsmodul (21) ein Kommunikationsmodul (25) zugeordnet ist,
wobei dem System (10) ferner ein programmierbares mobiles Telekommunikationsendgerät (41) zugeordnet ist,
wobei das Detektionsmodul (21) wenigstens einen Sensor aufweist,
wobei der Sensor konfiguriert ist, die Anwesenheit eines Eindringlings in einem bei abgeschlossenem Fahrzeug (20) von außerhalb des Fahrzeugs (20) zugänglichen Überwachungsbereich (22) des Fahrzeugs (20) zu detektieren,
wobei das Detektionsmodul (21) und das Kommunikationsmodul (25) vorgesehen sind, ein Signal wenigstens vom Detektionsmodul (21) zum Kommunikationsmodul (25) zu übertragen,
wobei das Kommunikationsmodul (25) eine Mobilfunkschnittstelle zur Nutzung eines mobilen Telekommunikationsnetzes (40) aufweist, wobei das Kommunikationsmodul (25) und das programmierbare mobile Telekommunikationsendgerät (41) vorgesehen sind, in Abhängigkeit des Signals eine Benachrichtigungsinformation (30) vom Kommunikationsmodul (25) zum programmierbare mobilen Telekommunikationsendgerät (41) über die Mobilfunkschnittstelle wenigstens indirekt zu übertragen,
wobei das System (10) derart vorgesehen ist, dass im Fall einer Detektion der Anwesenheit eines Eindringlings in dem Überwachungsbereich (22) des Fahrzeugs (20) wenigstens die Benachrichtigungsinformation (30) vom Kommunikationsmodul (25) zum Telekommunikationsnetz (40) übertragen wird,
wobei dem System (10) eine dem mobilen Telekommunikationsnetz (40) zugeordnete Speicher-/Prozesseinheit (42) zugeordnet ist, **dadurch gekennzeichnet, dass** in Abhängigkeit einer in der Speicher-/Prozesseinheit (42) gespeicherten Weiterleitungsinformation die Benachrichtigungsinformation (30) zum programmierbaren mobilen Telekommunikationsendgerät (41) übertragen wird oder lediglich in der Speicher-/Prozesseinheit (42) gespeichert wird.

2. System (10) nach Anspruch 1, **dadurch gekennzeichnet, dass** das System ein Aktuatormodul aufweist, wobei das Aktuatormodul derart konfiguriert ist, dass durch Aktivierung des Aktuatormoduls ein Eindringling aus dem Überwachungsbereich (22) vertreibbar ist.

3. System (10) nach einem der vorhergehenden Ansprüche, **dadurch gekennzeichnet, dass** eine selbsttätige Aktivierung des Aktuatormoduls im Fall einer Detektion der Anwesenheit eines Eindringlings im Überwachungsbereich (22) des Fahrzeugs (20) vorgesehen ist.

4. System (10) nach einem der vorhergehenden Ansprüche, **dadurch gekennzeichnet, dass** das Kommunikationsmodul (25) dem Aktuatormodul zugeordnet ist, wobei das Kommunikationsmodul (25) vorgesehen ist, über das mobile Telekommunikationsnetz (40) wenigstens eine Aktivierungsinformation (31) zu empfangen, wobei das Aktuatormodul und das Kommunikationsmodul (25) vorgesehen sind, in Abhängigkeit der Aktivierungsinformation (31) ein weiteres Signal vom Kommunikationsmodul (25) zum Aktuatormodul zu übertragen, wobei eine Aktivierung des Aktuatormoduls im Falle des Empfangs des weiteren Signals vorgesehen ist.

5. System (10) nach einem der vorhergehenden Ansprüche, **dadurch gekennzeichnet, dass** das System (10) derart konfiguriert ist, dass die Aktivierungsinformation (31) vom programmierbaren mobilen Telekommunikationsendgerät (41) zum Kommunikationsmodul (25) übertragen wird.

6. System (10) nach einem der vorhergehenden Ansprüche, **dadurch gekennzeichnet, dass** das System (10) entweder derart konfiguriert ist, dass die Aktivierungsinformation (31) vom programmierbare mobilen Telekommunikationsendgerät (41) selbsttätig generiert und zum Kommunikationsmodul (25) übertragen wird oder dass das System (10) derart konfiguriert ist, dass die Aktivierungsinformation (31) aufgrund einer Benutzerinteraktion generiert und zum Kommunikationsmodul (25) übertragen wird.

7. System nach einem der vorhergehenden Ansprüche, **dadurch gekennzeichnet, dass** das System (10) derart konfiguriert ist, dass in Abhängigkeit einer in der Speicher-/Prozesseinheit (42) gespeicherten Reaktionsinformation die Aktivierungsinformation (30) selbsttätig bei Empfang der Benachrichtigungsinformation (30) zum Kommunikationsmodul (25) übertragen wird.

8. System (10) nach einem der vorhergehenden Ansprüche, **dadurch gekennzeichnet, dass** der wenigstens eine Sensor des Detektionsmoduls (21) ein Ultraschallsensor oder ein Infrarot-Sensor ist.

9. Verfahren zur Detektion und/oder Vorbeugung von Tierverbiss an Fahrzeugen durch Verwendung eines Systems (10) mit einem in oder an einem Fahrzeug (20) angebrachten Detektionsmodul (21),
wobei dem Detektionsmodul (21) ein Kommunikationsmodul (25) zugeordnet ist, wobei dem System (10) ferner ein programmierbares mobiles Telekommunikationsendgerät (41) zugeordnet ist,
wobei das Detektionsmodul (21) wenigstens einen Sensor aufweist, wobei der Sensor die Anwesenheit eines Eindringlings in einem bei abgeschlossenem Fahrzeug (20) von außerhalb des Fahrzeugs (20) zugänglichen Überwachungsbereich (22) des Fahrzeugs (20) detektiert,
wobei das Kommunikationsmodul (25) eine Mobilfunkschnittstelle zur Nutzung eines mobilen Telekommunikationsnetzes (40) aufweist,
wobei das Verfahren die folgenden Verfahrensschritte aufweist:
-- im Fall einer Detektion der Anwesenheit eines Eindringlings in dem Überwachungsbereich (22) des Fahrzeugs (20) wird ein Signal vom Detektionsmodul (21) an das Kommunikationsmodul (25) übertragen,
-- in Abhängigkeit des Signals wird eine Benachrichtigungsinformation (30) vom Kommunikationsmodul (25) über die Mobilfunkschnittstelle zum mobilen Telekommunikationsnetz (40) übertragen, wobei dem System (10) eine dem mobilen Telekommunikationsnetz (40) zugeordnete Speicher-/Prozesseinheit (42) zugeordnet ist, **dadurch gekennzeichnet, dass** in Abhängigkeit einer in der Speicher-/Prozesseinheit (42) gespeicherten Weiterleitungsinformation die Benachrichtigungsinformation (30) zum programmierbaren mobilen Telekommunikationsendgerät (41) übertragen wird oder lediglich in der Speicher-/Prozesseinheit (42) gespeichert wird.

10. Verfahren nach Anspruch 9, **dadurch gekennzeichnet, dass** das System ein Aktuatormodul aufweist, wobei durch Aktivierung des Aktuatormoduls ein Eindringling aus dem Überwachungsbereich (22) vertreibbar ist, wobei im Fall einer Detektion der Anwesenheit eines Eindringlings im Überwachungsbereich (22) des Fahrzeugs (20) eine selbsttätige Aktivierung des Aktuatormoduls erfolgt.

11. Verfahren nach Anspruch 9, **dadurch gekennzeichnet, dass** das System ein Aktuatormodul aufweist, wobei durch Aktivierung des Aktuatormoduls ein Eindringling aus dem Überwachungsbereich (22) vertreibbar ist, wobei das Kommunikationsmodul (25) dem Aktuatormodul zugeordnet ist, wobei das Kommunikationsmodul (25) über das mobile Telekommunikationsnetz (40) wenigstens eine Aktivierungsinformation (31) erhält, wobei in Abhängigkeit der Aktivierungsinformation (31) das Kommunikationsmodul (25) ein weiteres Signal zum Aktuatormodul überträgt, wobei das Aktuatormodul beim Empfang des weiteren Signals aktiviert wird.

12. Verfahren nach Anspruch 11, **dadurch gekennzeichnet, dass** die Aktivierungsinformation (31) vom programmierbaren mobilen Telekommunikationsendgerät (41) selbsttätig generiert und zum Kommunikationsmodul (25) übertragen wird oder dass die Aktivierungsinformation (31) aufgrund einer Benutzerinteraktion generiert und zum Kommunikationsmodul (25) übertragen wird.

13. Verfahren nach Anspruch 11, **dadurch gekennzeichnet, dass** in Abhängigkeit einer in der Speicher-Prozesseinheit (42) gespeicherten Reaktionsinformation die Aktivierungsinformation (30) selbsttätig bei Empfang der Benachrichtigungsinformation (30) zum Kommunikationsmodul (25) übertragen wird.

14. Computerprogramm mit Programmcodemitteln, mit deren Hilfe alle Schritte eines Verfahrens nach einem der Ansprüche 9 bis 11 durchführbar sind, wenn das Computerprogramm auf einer programmierbaren Einrichtung oder mehreren programmierbaren Einrichtungen des Systems (10) ausgeführt wird.

15. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 9 bis 11 durchführbar sind, wenn das Computerprogramm auf einer programmierbaren Einrichtung oder mehreren programmierbaren Einrichtungen des Systems (10) ausgeführt wird.

## Claims

1. System (10) for detection and/or prevention of animal gnawing on vehicles, wherein the system (10) has a detection module (21) mounted in or on a vehicle (20),
wherein a communication module (25) is associated with the detection module (21), wherein further a programmable mobile telecommunication terminal unit (41) is associated with the system (10),
wherein the detection module (21) has at least one sensor,
wherein the sensor is configured to detect the presence of an intruder in a monitoring zone (22) accessible from outside the vehicle (20) when the vehicle (20) is locked,
wherein the detection module (21) and the communication module (25) are provided to transmit a signal at least from the detection module (21) to the communication module (25), wherein the communication module (25) has a mobile radio interface to utilise a mobile telecommunication network (40), wherein the communication module (25) and the programmable mobile telecommunication terminal unit (41) are provided to transmit a notification information (30) from the communication module (25) to the programmable mobile telecommunication terminal unit (41) via the mobile radio interface, at least indirectly, wherein the system (10) is provided so that, in the case of a detection of the presence of an intruder in the monitoring zone (22) of the vehicle (20), at least the notification information (30) is transmitted from the communication module (25) to the telecommunication network (40),
wherein a storage/ processing unit (42) associated with the mobile telecommunication network is associated with the system (10), **characterised in that**, depending on a routing information stored in the storage/processing unit (42), the notification information (30) is transmitted to the programmable mobile telecommunication terminal unit (41) or is only stored in the storage/processing unit (42).

2. System (10) in accordance with claim 1, **characterised in that** the system has an actuator module, wherein the actuator module is configured so that an intruder can be driven away from the monitoring zone (22) by activation of the actuator module.

3. System (10) in accordance with one of the preceding claims, **characterised in that** an automatic activation of the actuator module is provided in the case of a detection of the presence of an intruder in the monitoring zone (22) of the vehicle (20).

4. System (10) in accordance with one of the preceding claims, **characterised in that** the communication module (25) is associated with the actuator module, wherein the communication module (25) is provided to receive at least an activation information (31) via the telecommunication network (40), wherein the actuator module and the communication module (25) are provided to transmit a further signal from the communication module (25) to the actuator module depending on the activation information, wherein an activation of the actuator module is provided in the case of receipt of the further signal.

5. System (10) in accordance with one of the preceding claims, **characterised in that** the system (10) is configured to that the activation information (31) is transmitted from the programmable mobile telecommunication terminal unit (41) to the communication module (25).

6. System (10) in accordance with one of the preceding claims, **characterised in that** the system (10) is configured either so that the activation information (31) is automatically generated by the programmable mobile telecommunication terminal unit (41) and is transmitted to the communication module (25) or the system (10) is configured so that the activation information (31) is generated on the basis of a user information based on user interaction and is transmitted to the communication module (25).

7. System in accordance with one of the preceding claims, **characterised in that** the system (10) is configured so that the activation information is automatically transmitted on receipt of the notification information (30) to the communication module (25), depending on a reaction information stored in the storage/processing unit (42).

8. System (10) in accordance with one of the preceding claims, **characterised in that** the at least one sensor of the detector module (21) is an ultrasonic sensor or an infrared sensor.

9. Method for detection and/or prevention of animal gnawing on vehicles by application of a system (10) with a detection module (21) mounted in or on a vehicle (20),
wherein a communication module (25) is associated with the detection module (21), wherein further a programmable mobile telecommunication terminal unit (41) is associated with the system (10),
wherein the detection module (21) has at least one sensor, wherein the sensor is configured to detect the presence of an intruder in a monitoring zone (22) accessible from outside the vehicle (20) when the vehicle (20) is locked,
wherein the communication module (25) has a mobile radio interface to utilise a mobile telecommunication network (40),
wherein the method comprises the following method steps:
- in the case of a detection of the presence of an intruder in the monitoring zone (22) of the vehicle (20), a signal is transmitted from the detector module (21) to the communication module (25),
- depending on the signal, a notification information (30) is transmitted from the communication module (25) via the mobile radio interface to the mobile telecommunication network (40), wherein a storage/processing unit (42) associated with the mobile telecommunication network (40) is associated with the system (10), **characterised in that**, depending on a routing information stored in the storage/processing unit (42), the notification information (30) is transmitted to the programmable mobile telecommunication terminal unit (41) or is only stored in the storage/processing unit (42).

10. Method in accordance with claim 9, **characterised in that** the system has an actuator module, wherein an intruder can be driven from the monitoring zone (22) by activation of the actuator module, wherein in the case of a detection of the presence of an intruder in the monitoring zone (22) of the vehicle (20), an automatic activation of the actuator module takes place.

11. Method in accordance with claim 9, **characterised in that** the system has an actuator module, wherein an intruder can be driven from the monitoring zone (22) by activation of the actuator module, wherein the communication module (25) is associated with the actuator module, wherein the communication module (25) receives at least one activation information (31) via the mobile telecommunication network (40), wherein a the communication module (25) transmits a further signal to the actuator module, depending on the activation information (31), wherein the actuator module is activated on receipt of the further signal.

12. Method in accordance with claim 11, **characterised in that** the activation information (31) is automatically generated by the programmable mobile telecommunication terminal unit (41) and is transmitted to the communication module (25) or **in that** the activation information (31) is generated on the basis of a user interaction and is transmitted to the communication module (25).

13. Method in accordance with claim 11, **characterised in that**, depending on a reaction information stored in the storage-processing unit (42), the activation information (30) is automatically transmitted to the communication module (25) on receipt of the notification information (30).

14. Computer program with program code means, with the aid of which all steps of a method in accordance with one of the claims 9 to 11 can be carried out when the computer program is executed on one or several of the programmable devices of the system (10).

15. Computer program product with a computer-readable medium and a computer program with program code means stored on a computer-readable medium, which are suitable for carrying out all steps of a method in accordance with one of the claims 9 to 11 when the computer program is executed on a programmable device or several programmable devices of the system (10).

## Revendications

1. Système (10) de détection et/ou de prévention de morsures d'animaux sur des véhicules, ce système (10) présentant un ou plusieurs modules de détection (21) installés sur un véhicule (20), dans lequel
un module de communication (25) est associé au module de détection (21), un terminal de télécommunication programmable mobile (41) étant en outre associé au système (10),
le module de détection (21) présente au moins un capteur,
le capteur est configuré pour détecter la présence d'un intrus dans une zone de surveillance (22) du véhicule (20) accessible de l'extérieur du véhicule (20) quand le véhicule (20) est fermé,
le module de détection (21) et le module de communication (25) sont conçus pour transmettre un signal au moins du module de détection (21) au module de communication (25),
le module de communication (25) présente une interface de téléphonie mobile pour l'utilisation d'un réseau de télécommunication mobile (40), le module de communication (25) et le terminal de télécommunication programmable mobile (41) sont conçus pour transmettre, au moins indirectement en fonction du signal, un message d'information (30) du module de communication (25) au terminal de télécommunication programmable mobile (41) via l'interface de téléphonie mobile,
le système (10) est conçu pour permettre, dans le cas d'une détection de la présence d'un intrus dans une zone de surveillance (22) du véhicule (20), la transmission d'au moins un message d'information (30) du module de communication (25) au réseau de télécommunication (40),
une unité de sauvegarde/traitement (42) associée au réseau de télécommunication (40) est associée au système (10),
**caractérisé en ce que**, en fonction d'une information de retransmission enregistrée dans l'unité de sauvegarde/traitement (42), le message d'information (30) est transmis au terminal de télécommunication programmable mobile (41) ou simplement sauvegardé dans l'unité de sauvegarde/traitement (42).

2. Système (10) selon la revendication 1, **caractérisé en ce que** le système présente un module actionneur, le module actionneur étant configuré pour chasser un intrus de la zone de surveillance (22) par activation du module actionneur.

3. Système (10) selon une des revendications précédentes, **caractérisé en ce qu'**une activation automatique du module actionneur est prévue dans le cas d'une détection de la présence d'un intrus dans la zone de surveillance (22) du véhicule (20).

4. Système (10) selon une des revendications précédentes, **caractérisé en ce que** le module de communication (25) est associé au module actionneur, le module de communication (25) étant conçu pour recevoir au moins une information d'activation (31) via le réseau de télécommunication mobile (40), le module actionneur et le module de communication (25) étant conçus pour, en fonction de l'information d'activation (31), transmettre un autre signal du module de communication (25) au module actionneur, une activation du module actionneur étant prévue en cas de réception de cet autre signal.

5. Système (10) selon une des revendications précédentes, **caractérisé en ce que** le système (10) est configuré de manière à ce que l'information d'activation (31) soit transmise par le terminal de télécommunication programmable mobile (41) au module de communication (25).

6. Système (10) selon une des revendications précédentes, **caractérisé en ce que** le système (10) est configuré de manière à ce que l'information d'activation (31) soit générée automatiquement par le terminal de télécommunication programmable mobile (41) et transmise au module de communication (25) ou que le système (10) est configuré de manière à ce que l'information d'activation (31) soit générée du fait d'une interaction de l'utilisateur et transmise au module de communication (25).

7. Système (10) selon une des revendications précédentes, **caractérisé en ce que** le système (10) est configuré de manière à ce que, en fonction d'une information de réaction enregistrée dans l'unité de sauvegarde/traitement (42), l'information d'activation (31) soit transmise automatiquement au module de communication (25) à réception du message d'information (30).

8. Système (10) selon une des revendications précédentes, **caractérisé en ce que** l'au moins un capteur du module de détection (21) est un capteur à ultrasons ou un capteur à infrarouges.

9. Procédé de détection et/ou de prévention de morsures d'animaux sur des véhicules en utilisant un système (10) équipé d'un module de détection (21) installé sur dans ou sur un véhicule (20), dans lequel
est associé au module de détection (21) un module de communication (25),
un terminal de télécommunication programmable mobile (41) est en outre associé au système (10),
le module de détection (21) présente au moins un capteur, le capteur détectant la présence d'un intrus dans une zone de surveillance (22) du véhicule (20) accessible de l'extérieur du véhicule (20) quand le véhicule (20) est fermé,
le module de communication (25) présente une interface de téléphonie mobile pour l'utilisation d'un réseau de télécommunication mobile (40),
ce procédé comportant les étapes opératoires suivantes :
- dans le cas d'une détection de la présence d'un intrus dans une zone de surveillance (22) du véhicule (20), un signal est transmis par le module de détection (21) au module de communication (25),
- en fonction du signal, un message d'information (30) est transmis au module de communication (25) via l'interface de téléphonie mobile au réseau de télécommunication mobile (40), une unité de sauvegarde/traitement (42) associée au réseau de télécommunication mobile (40) étant associée au système (10),
**caractérisé en ce que**, en fonction de l'information de retranmission sauvegardée dans l'unité de sauvegarde/traitement (42), le message d'information (30) est transmis au terminal de télécommunication mobile programmable (41) ou simplement enregistré dans l'unité de sauvegarde/traitement (42).

10. Procédé selon la revendication 9, **caractérisé en ce que** le système présente un module actionneur, un intrus pouvant être chassé de la zone de surveillance (22) par activation du module actionneur, sachant que, dans le cas d'une détection de la présence d'un intrus dans la zone de surveillance (22) du véhicule (20), il y a une activation automatique du module actionneur.

11. Procédé selon la revendication 9, **caractérisé en ce que** le système présente un module actionneur, un intrus pouvant être chassé de la zone de surveillance (22) par activation du module actionneur, le module de communication (25) étant associé au module actionneur, le module de communication (25) recevant via le réseau de télécommunication mobile (40) au moins une information d'activation (31), sachant que, en fonction de l'information d'activation (31), le module de communication (25) transmet un autre signal au module actionneur, le module actionneur étant activé à la réception de l'autre signal.

12. Procédé selon la revendication 11, **caractérisé en ce que** l'information d'activation (31) est générée automatiquement par le terminal de télécommunication programmable mobile (41) et transférée au module de communication (25) ou que l'information d'activation (31) est générée du fait d'une interaction de l'utilisateur et transmise au module de communication (25).

13. Procédé selon la revendication 11, **caractérisé en ce que**, en fonction d'une information de réaction sauvegardée dans l'unité de sauvegarde/traitement (42), l'information d'activation (31) est transmise automatiquement au module de communication (25) à réception du message d'information (30).

14. Programme informatique comportant des moyens de codage de programme, à l'aide duquel toutes les étapes d'un procédé selon une des revendications 9 à 11 peuvent être réalisées si le programme informatique est exécuté sur un dispositif programmable ou plusieurs dispositifs programmables du système (10).

15. Programme informatique comportant un support lisible par ordinateur et un programme informatique sauvegardé sur le support lisible par ordinateur et présentant des moyens de codage de programme qui sont aptes à réaliser toutes les étapes d'un procédé selon une des revendications 9 à 11 si le programme informatique est exécuté sur un dispositif programmable ou plusieurs dispositifs programmables du système (10).
